# EUROPEAN PATENT SPECIFICATION

(11) **EP 3 504 160 B1**
(45) Date of publication and mention of the grant of the patent: **07.06.2023**
(21) Application number: 17754364.2
(22) Date of filing: 21.08.2017
(51) Int. Cl.: C01G 45/12, H01M 4/136, H01M 4/1391, H01M 4/505, H01M 4/525, H01M 10/0525, H01M 10/0567

(54) **CATHODE ACTIVE MATERIAL FOR HIGH VOLTAGE SECONDARY BATTERY**
KATHODENAKTIVMATERIAL FÜR EINE HOCHSPANNUNGSSEKUNDÄRBATTERIE
MATERIAU ACTIF DE CATHODE POUR BATTERIE SECONDAIRE A HAUTE TENSION

(30) Priority: 25.08.2016 DK 201600490
(43) Date of publication of application: 03.07.2019
(73) Proprietor: Topsoe A/S, 2800 Kgs. Lyngby (DK)
(72) Inventor: DAHL, Søren, 3400 Hillerød (DK); HØJ, Jakob Weiland, 2820 Gentofte (DK); HØJBERG, Jonathan, 2800 Kgs. Lyngby (DK); KOLLIN, Line, Holten, 2700 Brønshøj (DK)
(74) Representative: Topsoe A/S
(86) International application number: PCT/EP2017/071009
(87) International publication number: WO 2018/036954

(56) References cited:
- WO-A1-2016/175311
- WO-A2-2013/055153
- JP-A- 2004 172 108
- US-A1- 2011 076 556
- US-A1- 2015 041 710

## Description

### FIELD OF THE INVENTION

Embodiments of the invention generally relate to a cathode active material for a high voltage secondary battery, a secondary battery where the cathode is fully or mainly operated above 4.4 V vs. Li/Li⁺ comprising the cathode active material and a method for preparing a cathode active material.

### BACKGROUND

Lithium-ion batteries are common in consumer electronics. They are one of the most popular types of rechargeable batteries for portable electronics, with a high energy density, small memory effect, and only a slow loss of charge when not in use. For the same reason they are also considered one of the best technologies for use in electrical vehicles and for storage of electrical energy from intermittent sources of renewable electrical energy. Lithium ion battery materials are under continued development in order to further refine the batteries. Improvements typically relate to one or more of the following: increasing the energy density, cycle durability, lifetime and safety of the batteries, shortening the charging time and lowering the cost of the batteries.

Oxide materials containing lithium and transition metals that can be charged to high voltage (cathode charged to > 4.4 V vs. Li/Li⁺) are suitable as cathode active materials. Due to the high potential, batteries made from such a material has a higher energy density compared to batteries made with other battery materials, such as lithium cobalt oxide and lithium iron phosphate. Batteries based on high voltage materials can be used in high energy and high rate applications.

Another important factor for the choice of materials for the Lithium ion battery (LiB) is the abundance of their components in the earth crust securing long term availability and cost reduction, due to which materials based on iron and manganese are of great interest. Especially manganese oxides constitute a promising group of cathode active materials, because manganese is a low priced and non-toxic element. In addition, manganese oxides have a rather high electric conductivity together with a suitable electrode potential. Among the lithium manganese oxides, the layered LiMnOz and the spinel-type LiMn₂O₄ (LMO) are the most prominent ternary phases. An advantage of the latter one in comparison to the layered phase is a higher potential of about 4.0 V against Li/Li⁺, whereas LiMnOz delivers only 3.0 V in average. The LiMn₂O₄ lattice offers three-dimensional lithium diffusion, resulting in a faster uptake and release of this ion. The diffusion of Li⁺ in doped LMO spinels is also equally fast in all three dimensions.

Among the transition metal doped LiMn₂O₄ spinel materials, LiNi_{0.5}Mn_{1.5}O₄ (LMNO) is a very promising material: It operates mainly at a relatively high voltage of 4.7 V vs. Li/Li⁺ due to the electrochemical activity of the Ni²⁺/Ni⁴⁺ redox couple. LiNi_{0.5}Mn_{1.5}O₄ has a theoretical specific discharge capacity of 147 mAh/g and therefore an attractive theoretical energy density of 4.7 V ^{∗} 147 Ah/kg = 691 Wh/kg active material, referring to lithium metal. By replacing 25% of the manganese ions with nickel, there is in theory no Mn³⁺ left in the structure. The spinel crystal structure of LNMO cathode active material is a cubic close-packed crystal lattice with space groups of P4s32 for the ordered phase and Fd-3m for the disordered phase. The spinel material may be a single disordered or ordered phase, or a mix of both (Adv. Mater. 24 (2012), pp 2109-2116).

LNMO materials are lithium positive electrode active materials dominated by the Ni doped LiMn₂O₄ spinel phase, which more specifically may be characterized by the general formula LiₓNi_{y}Mn_{2-y}O₄ with typical x and y of 0.9 ≤ x ≤ 1.1 and 0 ≤ y ≤ 0.5, respectively. The formula represents the composition of the cathode active spinel phase of the material. Such materials may be used for e.g. portable electric equipment (US 8,404,381 B2), electric vehicles, energy storage systems, auxiliary power units (APU) and uninterruptible power supplies (UPS).

Electrode active LNMO materials for lithium ion batteries are described abundantly in the literature. Thus, US 5,631,104 describes insertion compounds having the formula Liₓ₊₁M_{z}Mn_{2-y-z}O₄ wherein the crystal structure is spinel-like, that can reversibly insert significant amounts of Li at potentials greater than 4.5 V vs. Li/Li⁺. M is a transition metal in particular Ni and Cr, 0≤x≤1, 0≤y<0.33, and 0<z<1.

US8,956,759 (Y.K Sun et al.) describes a 3V class spinel oxide with improved high-rate characteristics which has the composition Li₁₊ₓM_{y}Mn_{2-y}O_{4-z}S_{z} (0≤x≤0.1; 0.01≤y≤0.5, 0.01≤z≤0.5) and M is Mn, Ni or Mg, wherein the spinel oxide is composed of spherical secondary particles having a particle diameter of 5-20 µm obtained from aggregation of primary particles having a particle diameter of 10-50 nm. Further disclosed is a method for preparing the 3V class spinel oxide by carbonate co-precipitation of starting materials, addition of elemental sulfur, followed by calcination. The 3V class spinel oxide is spherical and has a uniform size distribution.

The oxide of US8,956,759 described above has the disadvantage, well-known to those skilled in the art that the relative high surface area arising from the very small size of primary particles leads to relative fast electrolyte decomposition on the surface of the spinel oxide at high voltages as well relatively fast dissolution of metals from the cathode in the electrolyte, and thereby to degradation of a battery comprising the spinel oxide as the active part of the cathode.

An object of the invention is to provide a cathode active material for a high voltage secondary battery having an improved performance. In particular, it is an object to provide a cathode active material having better cycle durability.

### SUMMARY OF THE INVENTION

Embodiments of the invention generally relate to a cathode active material for a secondary battery where the cathode is fully or mainly operated above 4.4 V vs. Li/Li⁺ and comprise sulfate to improve the cycle durability of the battery. It has been shown, that when the cathode active material comprises sulfur in the form of a sulfate, and not as a sulfide, the discharge capacity at rapid discharges (e.g. at 10C) increases and the internal resistance and degradation decrease, whilst the discharge capacity of the cathode active material is unchanged.

The term "being fully or mainly operated above 4.4 V vs. Li/Li⁺" is meant to denote that the battery is intended for operation above 4.4 V vs. Li/Li⁺, and that this is the case most of the time of use of the secondary battery, such as at least 70% of the time or even 90% of the time.

The cathode active material comprises lithium. Thus, the cathode active material is a material for a high voltage secondary lithium battery.

The cathode active material has the composition LiₓM_{y}Mn_{2-y}O₄₋ᵥ(SO₄)_{z}, where 0.9≤x≤1.1, 0.4≤y≤0.5, 0<z≤0.1, 0≤v≤z and M is Ni, and where the cathode active material comprises sulfate as a discharge capacity fade reducing compound. When the sulfur in the cathode active material is present in the form of sulfate, and not in the form of sulfide, the electrochemical performance of the material is improved. As it will be shown below the chemical composition of the above-mentioned spinel oxide is such that the sulfur is present in the cathode active material as a sulfate. In particular, the degradation rate is diminished compared to a material not comprising the sulfate.

The transition metal M of the cathode active material is Ni. Thereby, the composition of the cathode active material becomes LiₓNi_{y}Mn_{2-y}O₄₋ᵥ(SO₄)_{z}, where 0.9≤x≤1.1, 0.4≤y≤0.5, 0<z≤0.1, 0≤v≤z . Substituting some of the Mn in the spinel structure with Ni is advantageous due to the electrochemical activity of the Ni²⁺/Ni⁴⁺ redox couple at 4.7 V vs Li/Li⁺ leading to high capacity above 4.4 V vs Li/Li⁺. Additional benefits of the incorporation of Ni include lowering the amount of trivalent Mn, which reduces the risk of Mn dissolution in the electrolyte. Furthermore, partial substitution of Mn with Ni is also known to improve cycling behavior as well as rate capability.

In an embodiment of the invention, the bulk structure of the LiₓM_{y}Mn_{2-y}O₄₋ᵥ(SO₄)_{z} cathode active material has a spinel structure. The spinel structure is for example described by the Fd-3m space group. Generally, spinel phase has two possible crystallographic forms: the cation ordered spinel phase (space group P4₃32) and the cation disordered phase (space group Fd-3m). In the ordered phase, Mn⁴⁺/Mn³⁺ and M²⁺ (e.g. Ni²⁺) ions occupy distinct crystallographic sites, which gives rise to a superstructure with an easily identifiable X-ray diffraction pattern. In the dis-ordered phase, Mn⁴⁺/Mn³⁺ and Ni²⁺ ions are randomly distributed. It is well-known to those skilled in the art (see, for example, J. Cabana, et al., Chem. Mater. 2012, 23, 2952) that the degradation (fade) rate of ordered spinel materials is generally higher than that of dis-ordered spinel materials.

It should be noticed that in practice there will often be small deviations from the theoretical composition and average oxidation states when synthesizing a material. This can either be because of deviation from the exact stoichiometry, the existence of defects and inhomogeneity in the structure or the existence of impurity phases which alters the composition of the main phase. It is for instance well known that small amounts of a rock salt phase is present when synthesizing LNMO which affects the stoichiometry of the spinel phase and renders the total material oxygen deficient (Composition-Structure Relationships in the Li-ion Battery Electrode Material LiNi0.5Mn1.5O4, J.Cabana et. al, Chemistry of Materials 2012, 24, 2952). Such unintended deviations should not restrict or in any way limit the scope of the appended claims.

In an embodiment of the invention, the mean primary particle size of the cathode active material is above 50 nm, preferably above 100 nm, and most preferably above 200 nm. Typical sizes are some hundreds nm, but in some cases primary particles of up to 10 or 20 µm are observed. The average primary particle size influences the specific surface area of the cathode active material; smaller particles give rise to a larger specific surface area than larger ones. A lower surface area can improve the cycling stability of the battery, because oxidative decomposition of the electrolyte and metal dissolution from the cathode material, which lowers the stability of the battery, are taking place at the surface of the cathode material.

In an embodiment, d₅₀ of the cathode active material secondary particles is between 1 and 50 µm, preferably between 3 and 25 µm and wherein the particle size distribution of the secondary particles is characterized by the ratio of d₉₀ to d₁₀ of less than 8. Here, dso is the median value of the volume based particle size distribution; thus, half of the volume of particles has a particle size smaller than dso and half of the volume of particles has a particle size larger than d₅₀. Similarly, 90 percent of the volume of particles has a size below d₉₀, and 10 percent of the volume of particles has a size below d₁₀. When the particle size distribution is as indicated above, viz. a relatively narrow particle size distribution, it is easier to process the powder into a good battery electrode with a high volumetric content of active material, thereby improving the volumetric energy density of battery.

In an embodiment of the invention, the surface area of the cathode active material is less than 0.5 m²/g, preferably below 0.3 m²/g, and most preferably below 0.2 m²/g. In a secondary battery comprising the cathode active material having a surface area as this, the destructive reaction with the electrolyte of the secondary battery is slowed down as compared to a similar material with a larger surface area.

The crystal growth that takes place to obtain a large average primary particle size will normally also improve the tap density of the material because it is usually associated with sintering that leads to a lower porosity of the secondary particles.

In an embodiment, the tap density of the cathode active material is above 2 g/cm³, preferably above 2.2 g/cm³, and most preferably above 2.35 g/cm³. Typically, the tap density is below 3.0 g/cm³, or even below 2.8 g/cm³. Tap densities above 2 g/cm³ are advantageous since higher tap densities tend to lead to higher active material loading in the electrode of a battery, thus providing higher capacity of the battery.

In an embodiment of the cathode active material according to the invention, the surface of the secondary particles is enriched in sulfate compared to the average composition of the material. Hereby, the total amount of sulfur in the material may be somewhat less than if the sulfate was evenly distributed throughout the material. This entails that the overall weight increase by adding sulfate to the material is less than if the sulfate was evenly distributed throughout the material. The surface layer of the secondary particles is e.g. determined by XPS and the average composition of the material is e.g. determined by ICP.

Another aspect of the invention relates to a secondary battery where the cathode is fully or mainly operated above 4.4 V vs. Li/Li⁺ comprising the cathode active material according to the invention.

A further aspect of the invention relates to a method for preparing a cathode active material for a high voltage secondary battery having the composition LiₓM_{y}Mn_{2-y}O₄₋ᵥ(SO₄)_{z}, where 0.9≤x≤1.1, 0.4≤y≤0.5, 0<z≤0.1, 0≤v≤z and M is Ni, wherein the cathode active material comprises sulfate as a capacity stabilizing compound, the process comprising the steps of:
(a) Mixing and/or co-precipitating starting materials containing metals and sulfur in appropriate molar ratios determined by the molar ratios between metals and sulfate in the final product; and
(b) carrying out heat treatment at a temperature between 700°C and 1200°C of the mixture of step (a) to provide the cathode active material.

In the method of the invention, step (a) comprises mixing the relevant starting materials in appropriate molar ratios to end up with the final product after the heat treatment of step (b). The mixing of the relevant starting material may e.g. be mixing and/or co-precipitation of metal carbonate(s), metal hydroxide(s) and/or metal sulfate(s). Additionally, further sulfate(s) may be used in the mixture. The sulfate in the final product may e.g. result from the sulfate(s) and/or from sulfur impurities in the other starting materials. Each of the precursors or starting materials may contain one or more of the metal elements.

The mixing step can involve liquids to aid the mixing of the precursors, if relevant, such as for example ethanol or water.

The term "metal" is meant to denote any of the following elements or combinations thereof: Li and Mn and the transition metal Ni.

Step (a) of the method of the invention comprises the sub-steps of:
(a1) mixing and/or co-precipitating starting materials in the form of metal precursors;
(a2) carrying out heat treatment at a temperature between 300°C and 1200°C of the mixture of step (a1), resulting in an intermediate, and
(a3) mixing the intermediate of step (a2) with a sulfate precursor to provide the mixture of step (a).

The sub-steps (a1)-(a3) are to be carried out in the order given. In this embodiment, the sulfate precursor is added in step (a3), viz. the first heating step (a2). The final mixture resulting from step (a3) is subsequently calcined in the heat treatment of step (b). This promotes a shell distribution of the sulfate close to the accessible surface of the secondary particles.

The total sulfur in the cathode active material is detectable, e.g. by energy dispersive X-ray analysis (EDX-analysis) in a SEM-instrument and by inductive coupled plasma - analysis (ICP), the latter with a precision of down to ±20 wt ppm.

The chemical identity of the sulfur in the cathode active material (e.g. sulfate or sulfide) is detectable with X-ray Photoelectron Spectroscopy (XPS) by determining the binding energy of the S2p electrons. For metal sulfates the binding energy of the S2p electron is about 169 eV and for metal sulfides the binding energy of the S2p electron is about 161.5 eV. To compensate for charging effect a reference binding energy of 284.8 eV for C1s electrons originating predominantly from the carbon tape is used.

In an embodiment of the method of the invention, the starting materials comprises metal precursors in the form of one or more oxides, one or more hydroxides, one or more carbonates, one or more nitrates, one or more acetates, one or more oxalates or a combination thereof.

The sulfate precursor comprises a metal sulfate, where the metal is either Li, Ni or Mn or a combination thereof, or the sulfate precursor is a compound comprising SO₄ and only leaving SC₄²⁻ behind in the final product, such as H₂SO₄ or (NH₄)₂SO₄. In case of (NH₄)₂SO₄, NH₄⁺ is turned into gaseous compounds in the heat treatment of step (b).

In an embodiment of the method of the invention, step (b) is carried out at a temperature of between about 700°C and about 1200°C in an oxygen rich atmosphere. Such an oxygen rich atmosphere, which is also denoted "non-reducing atmosphere" or "oxidative atmosphere", may be e.g. air or a gaseous composition comprising at least 5 vol% oxygen in an inert gas. The non-reducing atmosphere may be provided by the type of gas present within the reaction vessel during heating. Preferably, the non-reducing gas is air.

In the method of the invention, step (a2) is carried out at a temperature of between about 300°C and about 1200°C. Step (a2) may be carried out in air or in a reducing atmosphere. A reducing atmosphere may be provided by the presence of a reducing gas; for example, the reducing gas may be one or more gases selected from the group of: hydrogen; carbon monoxide; carbon dioxide; nitrogen; less than 15 vol% oxygen in an inert gas; air and hydrogen; air and carbon monoxide; air and methanol; air and carbon dioxide; and mixtures thereof. The term "less than 15 vol% oxygen in an inert gas" is meant to cover the range from 0 vol% oxygen, corresponding to an inert gas without oxygen, up to 15 vol% oxygen in an inert gas. Preferably, the amount of oxygen in the reducing atmosphere is low, such as below 1000 ppm and most preferably below 10 ppm. Typically, oxygen would not be added to the atmosphere; however, oxygen may be formed during the heating.

Additionally, a reducing atmosphere may be obtained by adding a substance to the precursor composition or by adding a gaseous composition to the atmosphere in order to remove all or part of any oxidising species present in the atmosphere of the reaction vessel during heating. The substance may be added to the precursor either during the preparation of the precursor or prior to heat treatment. The substance may be any material that can be oxidised and preferably comprising carbon, for example, the substance may be one or more compounds selected from the group consisting of graphite, acetic acid, carbon black, oxalic acid, wooden fibres and plastic materials.

The heat treatment(s) of step (a3) and/or (b) can be done in one or more steps. In this case, at least one of the steps is carried out at a temperature of above about 700°C. As an example only, a first step is a heat treatment at 900°C in a given atmosphere, followed by a second step being a heat treatment in the same given atmosphere at e.g. 700°C.

### BRIEF DESCRIPTION OF THE FIGURES

Embodiments of the present invention are explained, by way of example, and with reference to the accompanying drawings. It is to be noted that the appended drawings illustrate only examples of embodiments of this invention and are therefore not to be considered limiting of its scope, for the invention may admit to other equally effective embodiments.
Fig. 1 is a graph showing the calibrated S2p spectra obtained using XPS of two cathode active materials with sulfate doping, prepared as described in Examples 1 and 2, and Li₂SO₄ as a reference;
Fig. 2 is a graph of the amount of Li2SO4 in the sulfur doped cathode active material with the amount of sulfur added to the synthesis as described in Examples 1-3;
Fig. 3 are scanning electron micrographs (a and b) and energy-dispersive X-ray spectrograms (c, d and e) of a representative sulfur doped cathode active material particle as prepared in Example 2 with 8000 ppm S;
Fig. 4 is a graph showing the voltage profile of constant current charge and discharge of cathode active materials with and without sulfate doping, prepared as described in Example 1;
Fig. 5 is a graph showing the voltage profile of constant current discharges of cathode active materials with and without sulfate doping, prepared as described in Example 1;
Fig. 6 is a graph showing the relative degradation during constant current electrochemical cycling of cathode active materials with and without sulfate doping, prepared as described in Example 1;
Fig. 7 is a graph showing the relative degradation during constant current electrochemical cycling of cathode active materials with and without sulfate doping, prepared as described in Example 2;
Fig. 8 is a graph showing the relative degradation during constant current electrochemical cycling of cathode active materials with and without sulfate doping, prepared as described in Example 3; and
Fig. 9 is a graph showing the relative change in battery material parameters: discharge capacity, power capability, 0.2C degradation and 1C degradation as a function of sulfate doping in the cathode active material.

### DETAILED DESCRIPTION OF THE FIGURES

In the following, reference is made to embodiments of the invention. However, it should be understood that the invention is not limited to specific described embodiments. Instead, any combination of the following features and elements, whether related to different embodiments or not, is contemplated to implement and practice the invention.

Moreover, in the following, the terms "cathode active material" is meant to denote a LNMO material with the formula LiₓNi_{y}Mn_{2-y}O₄₋ᵥ(SO₄)_{z}, where 0.9≤x≤1.1, 0.4≤y≤0.5, 0<z≤0.1, 0≤v≤z. In addition, the term "cathode active material" is meant to cover reference samples with 0 ppm sulfur corresponding to z = 0.

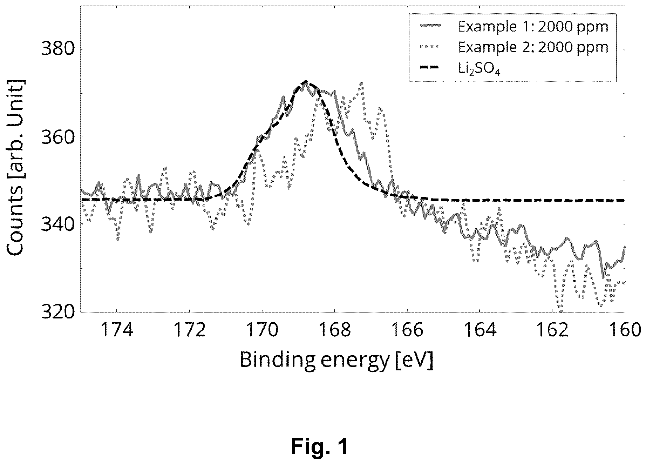

Fig. 1 is a graph showing the calibrated S2p spectra obtained using XPS of two cathode active materials with sulfate doping, prepared as described in Examples 1 and 2, and Li₂SO₄ as a reference. The binding energy is around 169 eV in all three cases, showing that the sulfur present is in the form of sulfate rather than sulfide in which the binding energy is around 161.5 eV. This is also evident by direct comparison with the spectrum of Li₂SO₄. The spectra are calibrated according to the C1s peak, predominantly from the carbon tape, and the peak heights and baselines are autoscaled.

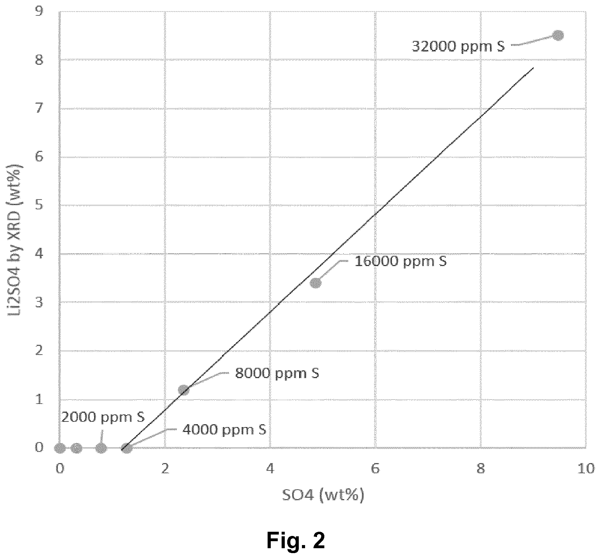

Fig. 2 is comparing the amount of Li₂SO₄ in the sulfur doped cathode active material with the amount of sulfur added to the synthesis as described in Examples 1-3. The amount of Li₂SO₄ is determined by Rietveld refinement of XRD spectra acquired of the sulfur doped cathode active materials.

From Fig. 2 it is seen that too much sulfur leads to significant formation of Li₂SO₄. In the current example, more than 4000 ppm S will lead to the formation of Li₂SO₄. The presence on Li₂SO₄ is not desired because it does not contribute to the capacity of the cathode active material. Furthermore, Li₂SO₄ may be unstable in batteries operated mainly or partly above 4.4 V vs. Li/Li+.

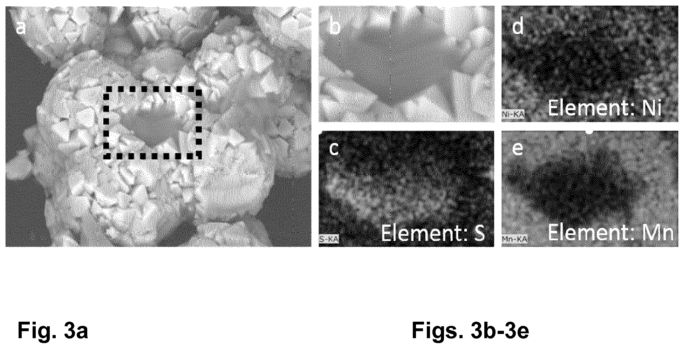

Fig. 3 is scanning electron micrographs (a and b) and energy-dispersive X-ray spectrograms (c, d and e) of a representative sulfur doped cathode active material particle as prepared in Example 2 with 8000 ppm S. The grey substance on the particle in Fig. 3a is enlarged in Fig. 3b and analysed with EDX in Figs. 3c-3e. From Figs. 3c-3e it can be seen, that the grey substance contains S, but not Ni and Mn, and it is thus most likely excess sulfur in the form of Li₂SO₄.

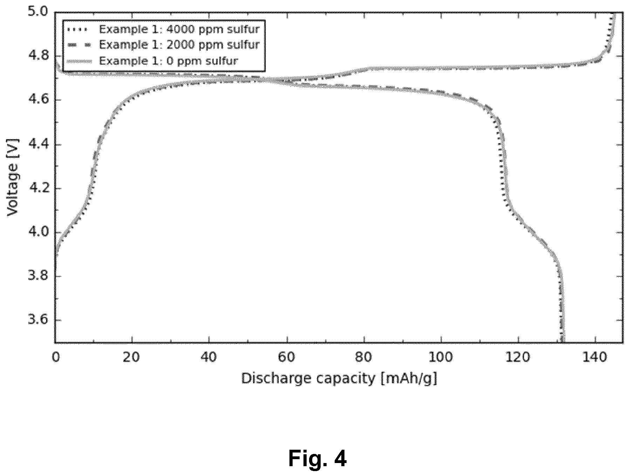

Fig. 4 is a graph showing the voltage profile of constant current charge and discharge of cathode active material with and without sulfate doping, prepared as described in Example 1. The electrochemical measurements are performed in half cells at 50 °C with a current corresponding to 0.2C. It is seen that the discharge capacity and the shape of the voltage profile are unchanged by sulfur doping. This indicates that the bulk properties of the material are unchanged.

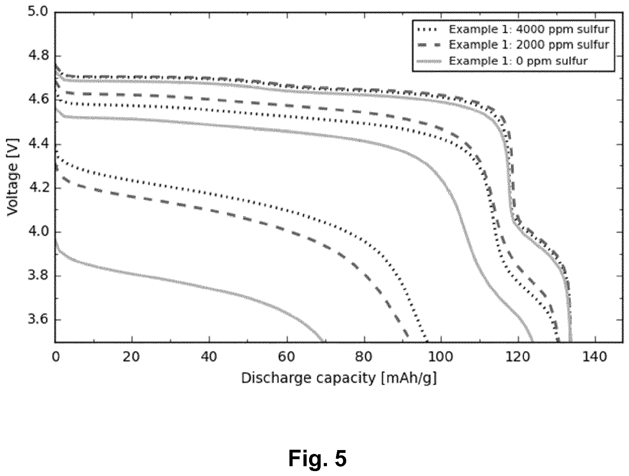

Fig. 5 is a graph showing the voltage profile of constant current discharges of cathode active materials with and without sulfate doping, prepared as described in Example 1. The electrochemical measurements are performed in half cells at 50 °C with discharge currents corresponding to 0.5C, 2C and 10C. The three uppermost curves correspond to 0.5 C, whilst the three curves in the middle correspond to 2C and the three lowermost curves correspond to 10C. The curve in full line corresponds to 0 ppm sulfur, the broken line corresponds to 2000 ppm sulfur and the dotted curve corresponds to 4000 ppm.

From Fig. 5 it is seen, that for 0.5 C, the curves for 0 ppm, 2000ppm and 4000 ppm substantially follow each other and end in substantially the same discharge capacity value. For 2 C, the curve for 0 ppm is a bit distanced from the curves for 2000ppm and 4000 ppm, and the curve for 0 ppm ends in a lower discharge capacity value than the curves for 2000ppm and 4000 ppm. For rapid discharging, viz. for 10 C, the curve for 0 ppm is a somewhat distanced from the curves for 2000ppm and 4000 ppm, and the curve for 0 ppm ends in a somewhat lower discharge capacity value than the curves for 2000ppm and 4000 ppm. Moreover, it is seen that the material comprising 4000 ppm has both lower resistance (as seen by the higher voltage measurements) and higher discharge capacity than the material comprising 2000 ppm. Thus, in conclusion, as the current is increased, the over-potential increases and the discharge capacity decreases, but it is seen that an increased amount of sulfur decreases the over-potential at high rates and thereby increases the discharge capacity.

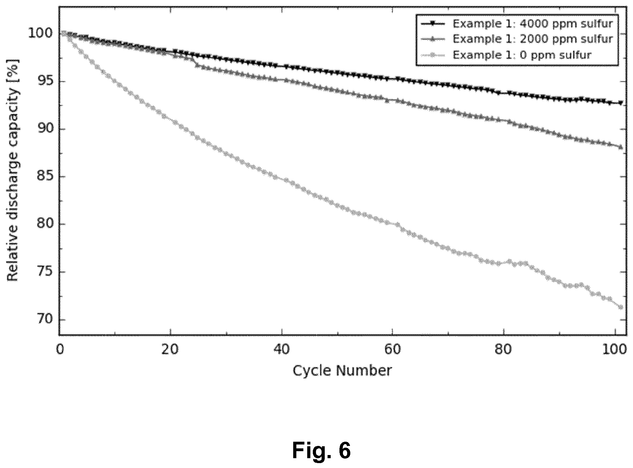

Fig. 6 is a graph showing the relative degradation during constant current electrochemical cycling of cathode active materials with and without sulfate doping, prepared as described in Example 1. The electrochemical measurements are performed in half cells at 50 °C between 3.5 V and 5 V with charge and discharge currents corresponding to 0.5C and 1C, respectively. It is seen that sulfate doping of cathode active material decreases the degradation significantly.

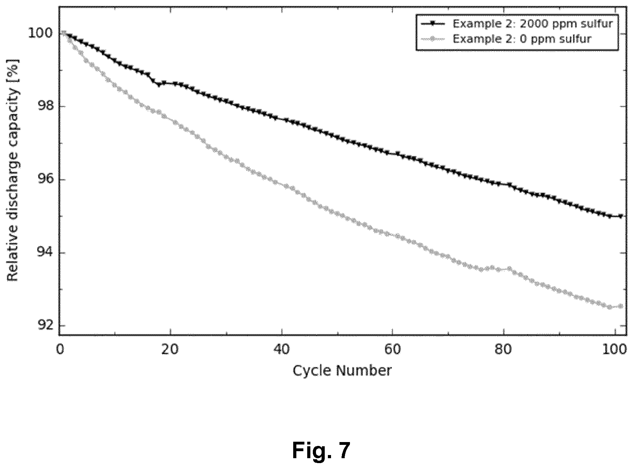

Fig. 7 is a graph showing the relative degradation during constant current electrochemical cycling of cathode active materials with and without sulfate doping, prepared as described in Example 2. The electrochemical measurements are performed in half cells at 50 °C between 3.5 V and 5 V with charge and discharge currents corresponding to 0.5C and 1C, respectively. It is seen that sulfate doping of cathode active material precursors decreases the degradation significantly.

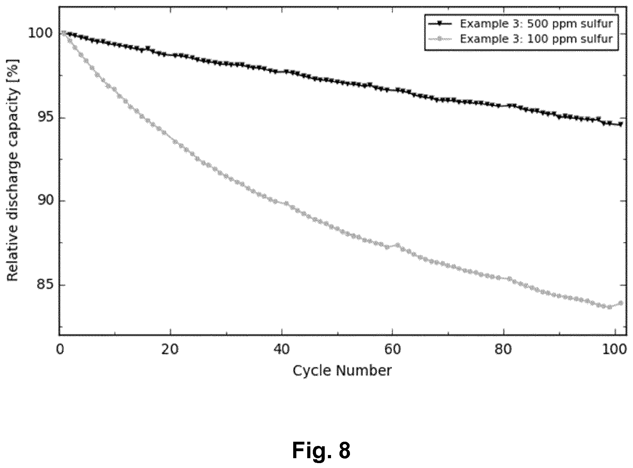

Fig. 8 is a graph showing the relative degradation during constant current electrochemical cycling of cathode active materials with and without sulfate doping, prepared as described in Example 3. The electrochemical measurements are performed in half cells at 50 °C between 3.5 V and 5 V with charge and discharge currents corresponding to 0.5C and 1C, respectively. It is seen that sulfate doping even at only 500 ppm, and as a result of impurities in the cathode active material precursors, decreases the degradation significantly.

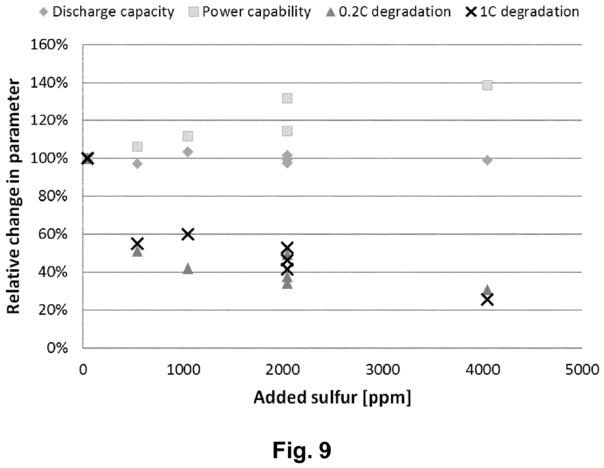

Fig. 9 is a graph showing the relative change in battery material parameters: initially measured discharge capacity, power capability, 0.2C degradation and 1C degradation as a function of sulfate doping in the cathode active material. The cathode active materials have been prepared in different ways and include the materials described in Examples 1, 2 and 3 among others. It is seen that sulfate doping does not change the discharge capacity; moreover, it increases the power by up to 40% and decreases degradation by up to 70%.

The relevant amount of S - viz. a sulfur content in the cathode active material is between 1000 and 16000 ppm - is thus an optimization between obtaining good performance as described in Figs. 4-9, while avoiding Li₂SO₄ as shown in Figs. 2-3.

### Example A: Method of electrochemical testing of battery materials prepared according to Examples 1, 2 and 3:

Electrochemical tests have been realized in 2032 type coin cells, using thin composite positive electrodes and metallic lithium negative electrodes (half-cells). The thin composite positive electrodes were prepared by thoroughly mixing 84 wt% of cathode active material (prepared according to Examples 1, 2 and 3) with 8 wt% Super C65 carbon black (Timcal) and 8 wt% PVdF binder (polyvinylidene difluoride, Sigma Aldrich) in NMP (N-methyl-pyrrolidone) to form a slurry. The slurries were spread onto carbon coated aluminum foils using a doctor blade with a 160 µm gap and dried for 2 hours at 80°C to form films. Electrodes with a diameter of 14 mm and a loading of approximately 7 mg of lithium positive electrode active material were cut from the dried films, pressed in a hydraulic pellet press (diameter 20 mm; 3 tonnes) and subjected to 10 hours drying at 120°C under vacuum in an argon filled glove box.

Coin cells were assembled in argon filled glove box (< 1 ppm O₂ and H₂O) using two polymer separators (Toray V25EKD and Freudenberg FS2192-11SG) and electrolyte containing 1 molar LiPF₆ in EC:DMC (1:1 in weight). Two 250 µm thick lithium disks were used as counter electrodes and the pressure in the cells were regulated with a stainless steel disk spacer and disk spring on the negative electrode side. Electrochemical lithium insertion and extraction was monitored with an automatic cycling data recording system (Maccor) operating in galvanostatic mode.

A standard test was programmed to run the following cycles: 3 cycles 0.2C/0.2C (charge/discharge), 3 cycles 0.5C/0.2C, 5 cycles 0.5C/0.5C, 5 cycles 0.5C/1C, 5 cycles 0.5C/2C, 5 cycles 0.5C/5C, 5 cycles 0.5C/10C, and then 0.5C/1C cycles with a 0.2C/0.2C cycle every 20^{th} cycle. C-rates were calculated based on the theoretical specific discharge capacity of the material of 148 mAhg⁻¹ so that e.g. 0.2C corresponds to 29.6 mAg⁻¹ and 10C corresponds to 1.48 Ag⁻¹.

The performance parameter "discharge capacity", "power capability", "0.2C degradation" and "1C degradation" are extracted from the standard test in the following way. The discharge capacity is the initial discharge capacity at 0.5C, measured in cycle 7. The power capability is the relative decrease in the measured discharge capacity at 10C compared to 0.5C, measured at cycles 29 and 7 respectively. The 0.2C degradation is the relative loss of discharge capacity at 0.2C over 100 cycles, measured between cycles 32 and 132. The 1C degradation is the relative loss of discharge capacity at 1C over 100 cycles, measured between cycles 33 and 133.

### Example 1: Method of preparing sulfate doped cathode active material:

Precursors in the form of 1162.47 g co-precipitated Ni,Mn-carbonate (Ni:0.5, Mn: 1.5) and 190.65 g Li₂CO₃ are mixed with ethanol to form a viscous slurry. The slurry is shaken in a paint shaker for 3 min. in order to obtain full de-agglomeration and mixing of the particulate materials. The slurry is poured into trays and left to dry at 80°C. The dried material is further de-agglomerated by shaking in a paint shaker for 1 min. in order to obtain a free flowing homogeneous powder mix.

The powder mix is sintered in a muffle furnace 2.5 hours at 700 °C with nitrogen flow.

This product is de-agglomerated by shaking for 6 min. in a paint shaker and passed through a 45 micron sieve. The powder is distributed in a 10-25 mm layer in alumina crucibles and sintered in air 14 hours at 900 °C and 4 hours at 700 °C.

The powder is again de-agglomerated by shaking for 6 min in a paint shaker and passed through a 45 micron sieve resulting in 866 g cathode active material consisting of 95.4 % LNMO, 3.6 % O3 and 1.1 % Rock salt.

Three 50 g portions are taken from the produced cathode active material. Two are mixed with 0.3434 g and 0.6868 g Li₂SO₄, respectively, to obtain sulfur content in the final product of 2000 ppm and 4000 ppm. The mixing is performed by solution of Li₂SO₄ in 10 g H₂O and 8 g ethanol and mixing this with the cathode material. The three powder samples, including the powder without sulfur doping, are sintered 4 hours at 900 °C and 4 h at 700 °C in air. The powder is again de-agglomerated by shaking for 6 min in a paint shaker and passed through a 38 micron sieve. The phase purity of all samples are 95 wt% or above. The electrochemical performances of the three samples are compared in Figs. 4, 5 and 6.

The actual sulfur contents in the products corresponding to 0 ppm sulfur and 2000 ppm sulfur was determined to be 40 ppm and 2090 ppm, respectively, using ICP.

### Example 2: Method of preparing sulfate doped cathode active material:

Precursors in the form of 2258.66 g co-precipitated Ni,Mn-carbonate (Ni:0.5, Mn: 1.5) and 394.78 g LiOH are dry-mixed for 1 hour.

Two portions of 50 g are taken from the dry-mixed precursor: One is mixed with Li₂SO₄ to obtain sulfur content in the final product of 2000 ppm. The two powder portions are sintered in a muffle furnace 3 hours at 700 °C with nitrogen flow.

The products are de-agglomerated by shaking for 6 min. in a paint shaker and passed through a 45 micron sieve. The powder is distributed in a 10-25 mm layer in alumina crucibles and sintered in air 14 hours at 900 °C and 2 hours at 700 °C.

The powder is again de-agglomerated by shaking for 6 min in a paint shaker and passed through a 45 micron sieve. The phase purity of both samples are 95 wt% or above. The electrochemical performances of the two samples are compared in Fig. 7.

To determine the chemical identity of the sulfur at the surface, XPS measurements were conducted on the cathode active materials with 2000 ppm sulfur doping from Examples 1 and 2. Fig. 1 shows the calibrated S2p spectra of these materials and Li₂SO₄ as a reference. It is seen that the binding energy is around 169 eV in all three cases, showing that the sulfur present is in the form of sulfate rather than sulfide in which the binding energy is around 161.5 eV. This is also evident by direct comparison with the spectrum of Li₂SO₄.

The XPS measurement can also reveal any radial distribution of the sulfate in the cathode active material particles. Table 1 shows the relative atomic ratios of the relevant compounds O, Mn, Ni and S in the cathode active materials from Examples 1 and 2 containing 2000 ppm sulfur.

**Table 1: Concentration of sulfur in the surface of sulfate doped cathode active material.**

| Target | O | Mn | Ni | S | O/(Mn+Ni) | (Mn+Ni)/S | Z_{surface} | sulfur |
|---|---|---|---|---|---|---|---|---|
| 2000 ppm (Example 1) | 72% | 24% | 1.8% | 1.5% | 2.8 | 18 | 0.11 | 2.0 wt% |
| 2000 ppm (Example 2) | 71% | 25% | 3.1% | 0.54% | 2.5 | 53 | 0.038 | 0.67 wt% |

O/(Mn+Ni) is the atomic ratio between oxygen and the transition metals in the LNMO spinel, i.e. Mn and Ni. The bulk value of this is 2, but deviations from bulk values are often found at the surface. (Mn+Ni)/S is the atomic ratio between the transition metals in the LNMO spinel and sulfur. This is used to calculate the value of z in the surface, Z_{surface}, by using the formula LiₓM_{y}Mn_{2-y}O₄₋ᵥ(SO₄)_{z}. A calculation of the relative amount of sulfur by weight corresponding to the z-value shows that the sulfur content is 10 times higher than the bulk value when the material is prepared as described in Example 1, and 3 times higher than the bulk value when the material is prepared as described in Example 2. This shows that the sulfate is preferentially found in the surface of the particles, when either one of the methods described in Examples 1 or 2 are used.

### Example 3: Method of preparing sulfate doped cathode active material:

Two cathode active materials based on precursors with different sulfur impurity levels in the Ni,Mn-carbonate are prepared identically: Precursors in the form of 30 g co-precipitated Ni,Mn-carbonate (Ni:0.5, Mn: 1.5) and 5.1 g LiOH are mixed dry in order to obtain a free flowing homogeneous powder mix. The two powder mixes are sintered in a muffle furnace 3 hours at 730 °C with nitrogen flow.

The products are de-agglomerated by shaking for 6 min. in a paint shaker and passed through a 45 micron sieve. The powder is distributed in a 10-25 mm layer in alumina crucibles and sintered in air 4 hours at 900 °C and 12 hours at 715 °C.

The powders are again de-agglomerated by shaking for 6 min in a paint shaker and passed through a 20 micron sieve. The phase purity of both samples is 98 wt%. The electrochemical performances of the two samples are compared in Fig. 8.

The two precursors have different amounts of sulfur impurities. One is 100 ppm and the other is 500 ppm. It was shown by ICP that the sulfur to Ni-Mn ratio is constant throughout the entire preparation of the sulfate doped cathode active material such that different amounts of sulfur impurities in the precursor will give battery cathode materials with correspondingly different amounts of sulfate doping.

Comparison of the electrochemical performance of the cathode materials produced in Examples 1, 2 and 3 is shown in Figs. 4-9. Fig. 9 furthermore includes additional experiments showing the same trend that the discharge capacity is unchanged, the power capability increases with sulfate doping and the degradation decreases with sulfate doping.

While the invention has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described.

## Claims

1. A cathode active material for a high voltage secondary battery with a cathode arranged for being fully or mainly operated above 4.4 V vs. Li/Li⁺, wherein the cathode active material is an oxide that comprises sulfate as a capacity fade reducing compound, wherein the cathode active material has the composition LiₓM_{y}Mn_{2-y}O₄₋ᵥ(SO₄)_{z}, where 0.9≤x≤1.1, 0.4≤y≤0.5, 0<z≤0.1, 0≤v≤z and M is Ni.

2. A cathode active material according to claim 1, wherein the sulfur content in the cathode active material is between 1000 and 16000 ppm.

3. A cathode active material according to any of the claims 1 to 2, wherein the mean primary particle size is above 50 nm, preferably above 100 nm, and most preferably above 200 nm.

4. A cathode active material according to any of the claims 1 to 3, wherein dso of the cathode active material secondary particles is between 1 and 50 µm, preferably between 3 and 25 µm and wherein the particle size distribution of the secondary particles is **characterized by** the ratio of d₉₀ to d₁₀ of less than 8.

5. A cathode active material according to any of the claims 1 to 4, wherein the surface area of the cathode active material is less than 0.5 m²/g, preferably below 0.3 m²/g, and most preferably below 0.2 m²/g.

6. A cathode active material according to any of the claims 1 to 5, wherein the tap density of the cathode active material is above 2 g/cm³, preferably above 2.2 g/cm³, and most preferably above 2.35 g/cm³.

7. A cathode active material according to any of the claims 1 to 6, wherein the surface of the secondary particles is enriched in sulfate compared to the average composition of the material.

8. A secondary battery comprising the cathode active material according to any of the preceding claims, wherein the cathode is fully or mainly operated above 4.4 V vs. Li/Li⁺.

9. A method for preparing a cathode active material for a high voltage secondary battery having the composition LiₓM_{y}Mn_{2-y}O₄₋ᵥ(SO₄)_{z}, where 0.9≤x≤1.1, 0.4≤y≤0.5, 0<z≤0.1, 0≤v≤z and M is Ni, wherein the cathode active material comprises sulfate as a capacity enhancing compound, the process comprising the steps of:
(a) Mixing and/or co-precipitating starting materials containing metals and sulfur in appropriate molar ratios determined by the molar ratios between metals and sulfate in the final product; and
(b) Carrying out heat treatment at a temperature between 700°C and 1200°C of the mixture of step (a) to provide the cathode active material,
wherein step (a) comprises the steps of:
(a1) mixing and/or co-precipitating starting materials in the form of metal precursors;
(a2) carrying out heat treatment at a temperature between 300°C and 1200°C of the mixture of step (a1), resulting in an intermediate,
(a3) mixing the intermediate of step (a2) with a sulfate precursor to provide the mixture of step (a), and
wherein the sulfate precursor comprises a metal sulfate, where the metal is either Li, Ni or Mn or a combination thereof, or the sulfate precursor is a compound comprising SO₄ and only leaving SO₄²⁻ behind in the final product.

10. A method according to claim 9, wherein the starting materials comprises metal precursors in the form of one or more oxides, one or more hydroxides, one or more carbonates, one or more nitrates, one or more acetates, one or more oxalates or a combination thereof.

11. A method according to any of the claims 9 or 10, wherein step (b) is carried out at a temperature of between about 700°C and about 1200°C in an oxygen rich atmosphere.

12. A method according to any of the claims 9 to 11, wherein step (a2) is carried out at a temperature of between about 300°C and about 1200°C in a reducing atmosphere.

## Patentansprüche

1. Kathodenaktivmaterial für eine Hochspannungs-Sekundärbatterie mit einer Kathode, die so eingerichtet ist, dass sie vollständig oder hauptsächlich oberhalb von 4,4 V gegen Li/Li⁺ betrieben werden kann, wobei das Kathodenaktivmaterial ein Oxid ist, das Sulfat als Material zur Verringerung des Kapazitätsabfalls umfasst, wobei das Kathodenaktivmaterial die Zusammensetzung LiₓM_{y}Mn_{2-y}O₄₋ᵥ(SO₄)_{z} hat, worin 0,9≤x≤1,1, 0,4≤y≤0,5, 0<z≤0,1, 0≤v≤z und M für Ni steht.

2. Kathodenaktivmaterial nach Anspruch 1, wobei der Schwefelgehalt in dem Kathodenaktivmaterial zwischen 1000 und 16000 ppm liegt.

3. Kathodenaktivmaterial nach einem der Ansprüche 1 bis 2, wobei die mittlere Primärteilchengröße über 50 nm, vorzugsweise über 100 nm und besonders bevorzugt über 200 nm liegt.

4. Kathodenaktivmaterial nach einem der Ansprüche 1 bis 3, wobei d₅₀ der Sekundärteilchen des Kathodenaktivmaterials zwischen 1 und 50 µm, vorzugsweise zwischen 3 und 25 µm liegt und wobei die Teilchengrößenverteilung der Sekundärteilchen durch ein Verhältnis von d₉₀ zu d₁₀ von weniger als 8 charakterisiert ist.

5. Kathodenaktivmaterial nach einem der Ansprüche 1 bis 4, wobei die Oberfläche des Kathodenaktivmaterials weniger als 0,5 m²/g, vorzugsweise weniger als 0,3 m²/g und besonders bevorzugt weniger als 0,2 m²/g beträgt.

6. Kathodenaktivmaterial nach einem der Ansprüche 1 bis 5, wobei die Klopfdichte des Kathodenaktivmaterials über 2 g/cm³, vorzugsweise über 2,2 g/cm³ und besonders bevorzugt über 2,35 g/cm³ liegt.

7. Kathodenaktivmaterial nach einem der Ansprüche 1 bis 6, wobei die Oberfläche der Sekundärteilchen im Vergleich zur durchschnittlichen Zusammensetzung des Materials mit Sulfat angereichert ist.

8. Sekundärbatterie, umfassend das Kathodenaktivmaterial nach einem der vorhergehenden Ansprüche, wobei die Kathode vollständig oder hauptsächlich oberhalb von 4,4 V vs. Li/Li⁺ betrieben wird.

9. Verfahren zur Herstellung eines Kathodenaktivmaterials für eine Hochspannungs-Sekundärbatterie mit der Zusammensetzung LiₓM_{y}Mn_{2-y}O₄₋ᵥ(SO₄)_{z}, worin 0,9≤x≤1,1, 0,4≤y≤0,5, 0<z≤0,1, 0≤v≤z und M für Ni steht, wobei das Kathodenaktivmaterial Sulfat als eine kapazitätssteigernde Verbindung umfasst, wobei das Verfahren die folgenden Schritte umfasst:
(a) Mischen und/oder Co-Fällen von Ausgangsmaterialien, die Metalle und Schwefel in geeigneten molaren Verhältnissen enthalten, die durch die molaren Verhältnisse zwischen Metallen und Sulfat im Endprodukt bestimmt sind; und
(b) Durchführen einer Wärmebehandlung der Mischung aus Schritt (a) bei einer Temperatur zwischen 700°C und 1200°C, um das Kathodenaktivmaterial bereitzustellen,
wobei Schritt (a) die folgenden Schritte umfasst:
(a1) Mischen und/oder Co-Fällen von Ausgangsmaterialien in Form von Metall-Präkursoren;
(a2) Durchführen einer Wärmebehandlung der Mischung aus Schritt (a1) bei einer Temperatur zwischen 300°C und 1200°C, wodurch ein Zwischenprodukt entsteht,
(a3) Mischen des Zwischenprodukts von Schritt (a2) mit einem Sulfat-Präkursor, um das Gemisch von Schritt (a) zu erhalten, und
wobei der Sulfat-Präkursor ein Metallsulfat umfasst, worin das Metall entweder Li, Ni oder Mn oder eine Kombination davon ist, oder der Sulfat-Präkursor eine Verbindung ist, die SO₄ umfasst und nur SO₄²⁻ im Endprodukt zurücklässt.

10. Verfahren nach Anspruch 9, wobei die Ausgangsmaterialien Metall-Präkursoren in Form von einem oder mehreren Oxiden, einem oder mehreren Hydroxiden, einem oder mehreren Carbonaten, einem oder mehreren Nitraten, einem oder mehreren Acetaten, einem oder mehreren Oxalaten oder einer Kombination davon umfassen.

11. Verfahren nach einem der Ansprüche 9 oder 10, wobei Schritt (b) bei einer Temperatur zwischen etwa 700°C und etwa 1200°C in einer sauerstoffreichen Atmosphäre durchgeführt wird.

12. Verfahren nach einem der Ansprüche 9 bis 11, wobei Schritt (a2) bei einer Temperatur zwischen etwa 300°C und etwa 1200°C in einer reduzierenden Atmosphäre durchgeführt wird.

## Revendications

1. Matériau actif de cathode pour batterie secondaire à haute tension avec une cathode agencée pour être entièrement ou principalement opérante au-dessus de 4,4 V vs. Li/Li⁺, le matériau actif de cathode étant un oxyde qui comprend du sulfate en tant que composé réduisant l'affaiblissement de capacité, le matériau actif de cathode ayant la composition LiₓM_{y}Mn_{2-y}O₄₋ᵥ(SO₄)_{z}, où 0,9 ≤ x ≤ 1,1, 0,4 ≤ y ≤ 0,5, 0 < z ≤ 0,1, 0 ≤ v ≤ z et M est Ni.

2. Matériau actif de cathode selon la revendication 1, où la teneur en soufre dans le matériau actif de cathode est comprise entre 1000 et 16 000 ppm.

3. Matériau actif de cathode selon l'une quelconque des revendications 1 à 2, où la taille moyenne des particules primaires est supérieure à 50 nm, de préférence supérieure à 100 nm, et le plus préférentiellement supérieure à 200 nm.

4. Matériau actif de cathode selon l'une quelconque des revendications 1 à 3, où la d₅₀ des particules secondaires du matériau actif de cathode est comprise entre 1 et 50 µm, de préférence entre 3 et 25 µm et où la distribution granulométrique des particules secondaires est **caractérisée par** le rapport de d₉₀ à d₁₀ qui est inférieur à 8.

5. Matériau actif de cathode selon l'une quelconque des revendications 1 à 4, où l'aire spécifique du matériau actif de cathode est inférieure à 0,5 m²/g, de préférence en dessous de 0,3 m²/g, et le plus préférentiellement en dessous de 0,2 m²/g.

6. Matériau actif de cathode selon l'une quelconque des revendications 1 à 5, où la masse volumique tassée du matériau actif de cathode est supérieure à 2 g/cm³, de préférence supérieure à 2,2 g/cm³, et le plus préférentiellement supérieure à 2,35 g/cm³.

7. Matériau actif de cathode selon l'une quelconque des revendications 1 à 6, où la surface des particules secondaires est enrichie en sulfate par rapport à la composition moyenne du matériau.

8. Batterie secondaire comprenant le matériau actif de cathode selon l'une quelconque des revendications précédentes, où la cathode est entièrement ou principalement opérante au-dessus de 4,4 V vs. Li/Li⁺.

9. Procédé de préparation d'un matériau actif de cathode pour batterie secondaire à haute tension ayant la composition LiₓM_{y}Mn_{2-y}O₄₋ᵥ(SO₄)_{z}, où 0,9 ≤ x ≤ 1,1, 0,4 ≤ y ≤ 0,5, 0 < z ≤ 0,1, 0 ≤ v ≤ z et M est Ni, où le matériau actif de cathode comprend du sulfate en tant que composé améliorant la capacité, le procédé comprenant les étapes :
(a) mélanger et/ou faire co-précipiter des matériaux de départ contenant des métaux et du soufre dans des rapports molaires appropriés déterminés par les rapports molaires entre métaux et sulfate dans le produit final ; et
(b) effectuer un traitement thermique à une température comprise entre 700 °C et 1200 °C du mélange de l'étape (a) pour donner le matériau actif de cathode,
où l'étape (a) comprend les étapes :
(a1) mélanger et/ou faire co-précipiter des matériaux de départ sous la forme de précurseurs métalliques ;
(a2) effectuer un traitement thermique à une température comprise entre 300 °C et 1200 °C du mélange de l'étape (a1), ce qui produit un intermédiaire,
(a3) mélanger l'intermédiaire de l'étape (a2) avec un précurseur sulfate pour donner le mélange de l'étape (a), et
où le précurseur sulfate comprend un sulfate de métal, le métal étant Li, Ni ou Mn ou une de leurs combinaisons, ou le précurseur métallique est un composé comprenant SO₄ et ne laissant subsister que SO₄²⁻ dans le produit final.

10. Procédé selon la revendication 9, où les matériaux de départ comprennent des précurseurs métalliques sous la forme d'un ou de plusieurs oxydes, d'un ou de plusieurs hydroxydes, d'un ou de plusieurs carbonates, d'un ou de plusieurs nitrates, d'un ou de plusieurs acétates, d'un ou de plusieurs oxalates ou d'une de leurs combinaisons.

11. Procédé selon l'une quelconque des revendications 9 ou 10, où l'étape (b) est effectuée à une température comprise entre environ 700 °C et environ 1200 °C dans une atmosphère riche en oxygène.

12. Procédé selon l'une quelconque des revendications 9 à 11, où l'étape (a2) est effectuée à une température comprise entre environ 300 °C et environ 1200 °C dans une atmosphère réductrice.
